## Europäisches Patentamt
## European Patent Office
## Office européen des brevets

(19)

(11) Numéro de publication: **0 109 474**
**A1**

(12)

# DEMANDE DE BREVET EUROPEEN

(21) Numéro de dépôt: **82830286.9**

(51) Int. Cl.³: **B 63 H 9/10**

(22) Date de dépôt: **23.11.82**

(43) Date de publication de la demande:
**30.05.84 Bulletin 84/22**

(84) Etats contractants désignés:
**AT BE CH DE FR GB LI LU NL SE**

(71) Demandeur: **Carbone, Adalberto**
**Via Trionfale n. 13720**
**I-00135 Roma(IT)**

(72) Inventeur: **Carbone, Adalberto**
**Via Trionfale n. 13720**
**I-00135 Roma(IT)**

(54) **Ecoute avec fonction de trapèze pour planche à voile (windsurf).**

(57) L'invention consiste essentiellement à doter l'écoute pour le soulèvement de la voile du windsurf d'un crochet approprié pour l'attaque à la bôme, ainsi à devenir apte à exercer la fonction de trapèze.

EP 0 109 474 A1

DESCRIPTION de l'invention industrielle au titre:

"écoute avec function de trapèze pour planche à voile (windsurf)" à CARBONE Adalberto, italien, domicilié à Rome, Via Trionfale n°13720.

TEXTE DE LA DESCRIPTION: Dans cet état des choses les windsurfs sont munis d'une écoute lieé au côté antérieur de la bôme qui n'exerce que la fonction de soulèvement de la voile. Par cette invention on donne, par contre, à l'écoute la possibilité d'exercer aussi la fonction de trapèze et dans ce but elle doit être construite avec des matériaux appropriés et munie à l'extrémité libre d'un crochet qui permette au surfiste' l'accrochage de l'écoute même à la bôme, après avoir soulevé la voile et avoir passé la susdite derrière son dos, comme indiqué dans la table explicative. Cette position donne au surfiste un confortable appui et un valable soutien pendant l'usage du surf; il peut en effet desserrer considérablement la prise des mains sur la bôme et à la limite permettre aux mêmes une remarquable liberté.

La facilité par la quelle on y peut se dégager en cas de rafale de vent ou de perte d'équilibre donne la plus grande sécurité. La régulation de la longueur de la écoute-trapèze en question, pour qu'elle soit proportionnée à la conformation physique du surfiste, peut se produire, par des simples noeuds.

0109474

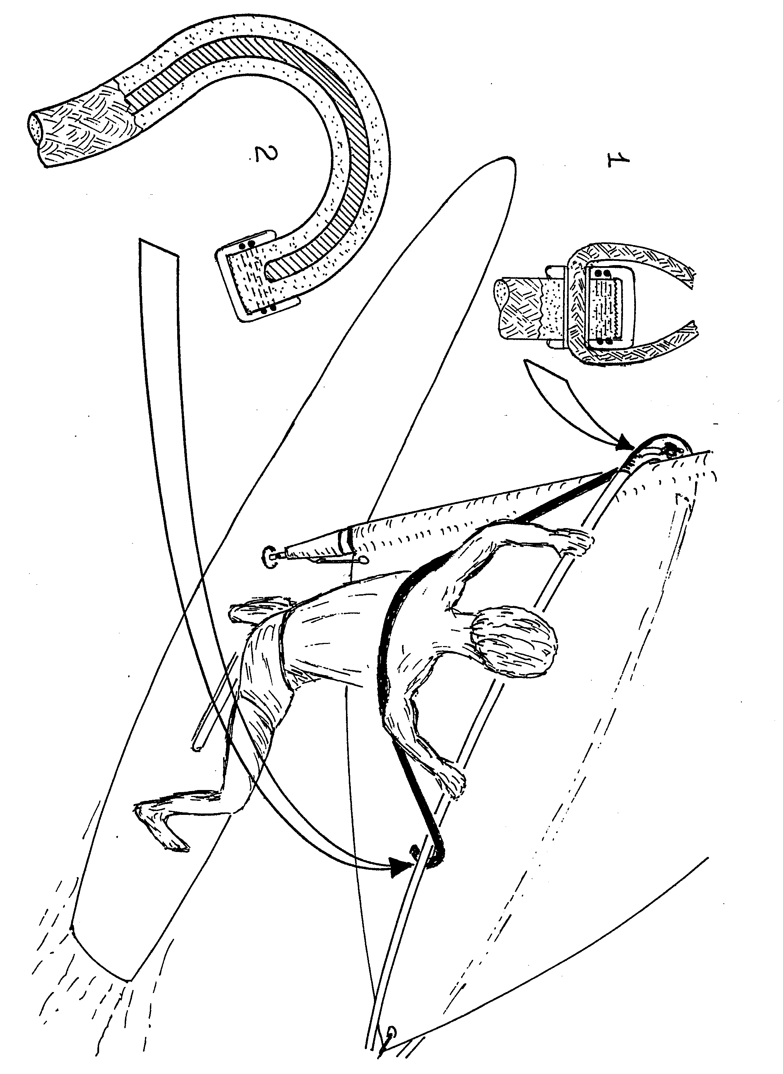

REVENDICATIONS

1) La forme que l'écoute peut assumer en ce qui concerne la section qui peut aussi s'éloigner de celle circulaire. L'écoute peut aussi être avantageusement ingainée et/ou rendue élastique, pour qu'elle soit plus confortable;

2) le système de fixation de l'écoute à la bôme (côté de proue) qui peut être réalisé par liage avec un petit câble additionnel, qui passe diamétralement l'extrémité de l'ècoute dans un trou pratiquè à chaud avec un outil approprié (voir dessin rif.1);

3) le système d'accrochage labile à la bôme qui est l'élément qui caractérise le brevet d'invention et qui peut assumer la forme d'un crochet traditionnel obtenu introduisant axialement dans l'extrémité libre de l'écoute, une appropriée âme en acier inoxydable) opportunément cintrée et bloquée à l'extrémité par liage métallique à chaud et protégée par un capuchon en plastique (voir dessin rif.2). L'entier crochet peut être plastifié;

4) chacun d'autre predispositions possibles telles de rendre l'écout utilisable, le cas échéant, comme trapèze.

0109474

2

1

Office européen
des brevets

**RAPPORT DE RECHERCHE EUROPEENNE**

Numéro de la demande

EP   82 83 0286

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 497 171  (AMEIL) <br> * Figure 1 * | 1 | B 63 H    9/10 |
| A | DE-U-8 116 030  (BRODNIG) <br> * Page  33,  ligne 28 - page 34, ligne 25; figures 1,2,4,11,12 * | 1-4 | |
| A | GB-A-  1 7741 <br> (STRINGER)(A.D.1911) <br> * Page  2, lignes 40-46; figures 1,2 * | 3 | |
| A | FR-A-1 057 668  (COUSIN) <br> * En entier * | 3 | |

**DOMAINES TECHNIQUES RECHERCHES (Int. Cl. ³)**

B 63 B
F 16 B
D 07 B

Le présent rapport de recherche a été établi pour toutes les revendications

| Lieu de la recherche <br> LA HAYE | Date d'achèvement de la recherche <br> 20-07-1983 | Examinateur <br> DE SCHEPPER H.P.H. |
|---|---|---|

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

                                   

& : membre de la même famille, document correspondant